Europäisches Patentamt

European Patent Office

Office européen des brevets

(11) Veröffentlichungsnummer: **0 026 758**
**B1**

(12) **EUROPÄISCHE PATENTSCHRIFT**

(45) Veröffentlichungstag der Patentschrift:
**30.11.83**

(21) Anmeldenummer: **80890109.4**

(22) Anmeldetag: **25.09.80**

(51) Int. Cl.³: **E 01 D 15/14,** E 02 B 15/00,
E 02 B 15/04, B 63 B 35/32,
B 63 B 35/34, B 63 B 35/53,
B 65 D 88/78

(54) **Gerät mit mehreren Schwimmkörpern.**

(30) Priorität: **27.09.79 AT 6327/79**

(43) Veröffentlichungstag der Anmeldung:
**08.04.81 Patentblatt 81/14**

(45) Bekanntmachung des Hinweises auf die Patenterteilung:
**30.11.83 Patentblatt 83/48**

(84) Benannte Vertragsstaaten:
**BE DE FR GB IT SE**

(56) Entgegenhaltungen:
**DE - A - 2 000 757**
**DE - A - 2 315 293**
**DE - B - 2 815 687**
**DE - C - 72 718**
**DE - U - 1 943 434**
**FR - A - 2 181 227**
**US - A - 3 321 923**
**US - A - 3 651 647**
**US - A - 4 145 290**

(73) Patentinhaber: **Kirchner, Sepp, A-5562 Obertauern Nr. 81 (AT)**

(72) Erfinder: **Kirchner, Sepp, A-5562 Obertauern Nr. 81 (AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

BUNDESDRUCKEREI BERLIN

## Gerät mit mehreren Schwimmkörpern

Die Erfindung betrifft ein Gerät mit mehreren Schwimmkörpern, die Durchmesser über 1,5 m aufweisen und in ihrer Grundform zylindrisch oder tonnenförmig ausgebildet sind, wobei das eine Ende jedes Schwimmkörpers einen Kugelkopf in Form eines Kugelsegments mit dem Schwimmkörper entsprechendem Durchmesser und das andere Ende eine um den vorgesehenen Schwenkwinkel kleinere Kugelpfanne bildet und die Schwimmkörper mit kugelgelenkartig ineinandergreifenden Enden durch Seile verbindbar sind, die durch axiale Öffnungen der Schwimmkörper geführt sind.

Geräte mit mehreren gelenkig untereinander verbindbaren Schwimmkörpern werden schon bisher für die verschiedensten Einsatzfälle verwendet. Ein bekanntes Anwendungsgebiet liegt bei der Errichtung von Not- und Behelfsbrücken, wo mehrere Pontons über gelenkige Fahrbahnstücke verbunden werden.

Bei einem aus der FR-A-2 181 227 bekannten Gerät wird ein einzelner Ponton durch eine aus zwei Schwimmkörpern und eine sie starr verbindende Plattform, die einen Teil einer Fahrbahn bildet, bestehende Einheit ersetzt, bei der die beiden Schwimmkörper parallel im Abstand angeordnet sind. Diese Einheiten werden hintereinander gereiht und über die durch · die Schwimmkörper geführten Seile verbunden. Wenn aus den Schwimmkörpereinheiten ein Bogen gebildet werden soll, ergibt sich hier dadurch ein prinzipieller Nachteil, daß wegen der verschiedenen Längen an der Außen- und Innenseite des Bogens an der Bogenaußenseite die Kugeln und Kugelpfannen der Schwimmkörper auseinanderklaffen und das an der Bogenaußenseite geführte Seil eine größere Länge als das an der Bogeninnenseite geführte Seil aufweisen muß, weshalb an geeigneter Stelle für einen Seilvorrat gesorgt werden muß, um die Bogenbildung aus den Schwimmkörpern zu ermöglichen. Die Seile sind durch einfache, in ihrem Durchmesser kaum größer als das Seil selbst gehaltenen Öffnungen abgedichtet durch Kugel und Kugelpfanne geführt. Es kommt bei einem aus dem Schwimmkörper gebildeten Bogen auch an der Bogeninnenseite zu Problemen, da bei der Bogenbildung auch hier eine größere Seillänge als bei gerade aneinandergereihten Schwimmkörpern benötigt wird und überdies bei der Verstellung der Kugel in der Pfanne das Seil um den Versatz der Öffnungen von Kugel und Pfanne in das aus diesen beiden Teilen gebildete Gelenk hineingezogen und dabei abgewinkelt wird, so daß Seilrisse zu befürchten sind.

Aus der DE-B1-2 815 687 ist eine Hochseeölsperre mit zylindrischen Schwimmkörpern bekannt, die abstandsweise auf eine Kette aufgefädelt werden, bombierte Enden aufweisen und zwischen denen auf der Kette eigene ebenfalls bombierte Enden aufweisende Dämmkörper angebracht werden. Eine so gebildete Schwimmkörperschlange ist schwer manövrierbar. Die einzelnen Schwimmkörper können Durchmesser bis 5 m und Längen bis 30 m aufweisen.

Aus der DE-A-2 000 757 ist es bekannt, Leichtschwimmkörper aus einer Außenhaut und einer Leichtfüllung die Durchmesser von etwa 0,5 m und Längen von etwa 1 m aufweisen können, mit stoßenden Enden auf Seile aufzufädeln, um so schwimmende Begrenzungseinrichtungen für Wassersportplätze, schwimmende Laufstege oder schwimmende Bootsanlegestege zu erhalten. Die einzelnen Schwimmkörper tragen am einen Ende eine Halbkugel und sind im anderen Ende mit einer Kugelpfanne ausgestattet, deren Durchmesser nur einen kleinen Bruchteil des Schwimmkörperdurchmessers ausmacht. Von der Kugelpfanne bzw. dem Kugelkopf ausgehend sind die übrigen Stirnflächen der Schwimmkörper leicht konisch, so daß eine geringfügige Abwinkelung der aufgefädelten Schwimmkörper gegeneinander möglich ist.

Aus der US-A-3 321 923 ist es wieder bekannt, zur Bildung einer Hochseeölsperre mehrere Schwimmkörper durch Schläuche zu einer Kette zu verbinden, die mit parallel nebeneinanderliegenden Einzelgliedern in sich zusammengefaltet aufbewahrt und in Form einer Schlange ausgefahren werden kann. Bei der erwähnten Art der Verbindung der einzelnen Schwimmkörper werden die einzelnen Schwimmkörper einander beim Ausfahren zur Schlange nicht zwangsweise folgen, wie dies bei einer Kugelgelenkverbindung der Fall wäre. Es ist bei dieser Konstruktion vorgesehen, in einzelne Schwimmkörper Strahlantriebe einzubauen um eine Eigenmanövrierung der Schlange zu ermöglichen, also beim Einsatz im Hafenbereich eine Manövrierung ohne Schleppereinsatz zu gestatten.

Ähnlich schwer manövrierbar ist die Schwimmkörperschlange nach der US-A-3 651 647, bei der die Schwimmkörper an einem Ende nasenartige Ansätze tragen, mit denen sie in einen größeren Krümmungsradius aufweisende Pfannen im anderen Ende des folgenden Schwimmkörpers eingreifen und jeweils im Endbereich über Querachsen gelenkig miteinander verbunden sind. Zur Verbesserung des Zusammenhaltes können die Schwimmkörper hier über außen aneinander gegenüberliegenden Seiten geführte Seile verbunden werden.

Aus der DE-U-1 943 434 ist es bekannt, Hohlplatten aus Stahl, die für den Schnellbau von Straßen, Brücken, Plattformen usw. bestimmt sind an den stoßenden Rändern mit konkaven bzw. konvexen Zylinderflächen zu versehen und über quer zu diesen Zylinderflächen geführte Seile zu verspannen, so daß eine gelenkige Verstellung der Platten gegeneinander möglich wird.

Schließlich ist aus der DE-A-2 315 293 eine Fahrzeugrumpfkonstruktion aus mehreren über die Längsrichtung des Rumpfes reichenden Rohren bekannt, die durch Quer- und Längsverbindungen nach Art von Floßfeldern zu Schwimmkörpern zusammengehalten werden.

Die Erfindung betrifft ein Gerät der eingangs genannten Art und besteht im wesentlichen darin, daß bei den zu einzelnen, eine Schlange bildenden Reihen verbindbaren Schwimmkörpern, die dem Durchzug des Seils dienenden axialen Öffnungen im Kugelkopf bzw. der Pfanne trichterartige Erweiterungen aufweisen, so daß die Spannlänge des Seils bei jeder Abwinkelung im wesentlichen konstant bleibt, und daß im Übergangsbereich von dem um den Schwenkwinkel größer als eine Halbkugel ausgebildeten Kugelkopf zum übrigen Schwimmkörper eine den Schwenkwinkel begrenzende Anschlagschulter für den Rand der Kugelpfanne ausgebildet ist.

Die Verwendung und Adaptierung der von der Doppelrumpf-Pontonkonstruktion bekannten Kugelgelenkskonstruktion für eine Einzelschlange bildende Schwimmkörperreihen hat den Vorteil, daß beim Transport der Schlange jeder einzelne Schwimmkörper dem vorhergehenden folgt, also die Manövrierbarkeit der Schlange verbessert wird. Auch beim Befahren von Bogen werden Überbeanspruchungen des Seils — dessen Spannlänge ja im wesentlichen konstant bleibt — vermieden.

Schwimmkörperschlangen können bei einem Dammbruch als Ersatzdammkrone verwendet oder in einem Gewässer zum Aufsammeln von Treibgut bzw. als Hochseeölsperre verwendet werden. Für den Hochsee-Einsatz werden Durchmesser ab 2 – 3 m und Längen ab 4 m insbesondere 6 m für die Schwimmkörper vorgesehen, die dann eine Wasserverdrängung von wenigstens 30% ihres Volumens aufweisen sollen. Durch diese Bemessung soll auch bei starkem Wellengang ein Öldurchtritt über oder unter der Sperre weitgehend ausgeschlossen werden. Für solche Einsätze ist es denkbar, im Bereich der Flußmündungen entsprechende Schwimmkörperschlangen mit Längen in der Größenordnung von 1 km in Bereitschaft zu halten und diese Schlangen mit Hilfe von Schleppern an den Katastrophenort heranzubringen, wo sie zu der genannten Sperre gekuppelt werden. Bei solchen Hochseeölsperren wird man Schwimmkörper aus Stahlblech mit verhältnismäßig großer Wandstärke, beispielsweise 10 mm, verwenden. Aus Schwimmkörperschlangen kann der Unterbau von schwimmenden Fahrbahnen, Flugzeuglandepisten usw. hergestellt werden.

Eine weitere Möglichkeit ergibt sich beim Wassertransport, wo man Schwimmkörper als Container für zu transportierende Güter ausbilden und zu einer leicht manövrierbaren Schlange aneinanderfügen kann.

Es ist auch ein vertikaler Einsatz der Schwimmkörper, die dann Auftriebskörper darstellen, möglich. Insbesondere kann man Schwimmkörper zu einer endlosen Einheit vereinigen, die als Förderorgan, ähnlich einer endlosen Kette, für Massentransporte von Gütern bzw. Rohstoffen vom Meeresgrund eingesetzt werden kann. Jeder Schwimmkörper kann hier einen wechselweise oben bzw. unten verschließbaren Ladebehälter tragen, der beim Durchlaufen des abwärts gehenden Trumes, der z. B. im Bereich ihres oberen Endes über ein turasartiges Umlaufrad geführten Kette mit Ballast gefüllt wird, um eine bestimmte Sinkkraft zu erzeugen. Am unteren Kettenende ist eine weitere Umlenkvorrichtung für die Kette vorhanden. Der Ballast wird beim Erreichen des unteren Kettenendes entleert, und es wird eine Befüllung der Behälter mit dem Ladegut, z. B. Manganknollen, vorgenommen, wofür insbesondere automatische Sammel- und Ladeeinrichtungen in Frage kommen. Dadurch, daß das Ballastgewicht im abwärtsgehenden Trum etwas größer als das Nutzgewicht der Ladung im aufwärtsgehenden Trum eingestellt wird, erhält man die notwendige Antriebskraft für die Kette. Es ist selbstverständlich auch ein Antrieb von außen bzw. eine Flutung der im abwärtsgehenden Trum befindlichen Schwimmkörper und eine automatische Entleerung der im aufwärtsgehenden Trum befindlichen mit Preßluft möglich.

Um bei längeren aus Schwimmkörpern hergestellten Gebilden die Seilspannung aufrecht zu erhalten und ein Auseinanderklaffen von aufeinanderfolgenden Schwimmkörpern zu vermeiden, kann in wenigstens einem Schwimmkörper einer Reihe eine Seilspannvorrichtung angebracht werden. Am Ende einer Schlange kann eine solche Seilspannvorrichtung Federn oder hydraulische bzw. pneumatische Stelltriebe umfassen, die auf das in diesem letzten Schwimmkörper geführte Seilende wirken. Bei langen Schlangen kann man in der Schlange abstandsweise Schwimmkörper mit Spannvorrichtungen anbringen, die entweder das Bestreben haben, das durchgehende Seil nach der Seite abzulenken und dadurch zu spannen oder die die Enden zweier zu den anschließenden Schlangenteilen gehörenden Seilstücke aufnehmen und in entgegengesetzter Richtung spannen.

Zur Bildung einer schwimmenden Brücke, Fahrbahn oder Landepiste können mehrere, je aus mehreren auf Seile aufgefädelten Schwimmkörpern bestehende Schwimmkörperschlangen nebeneinander angeordnet werden, wobei ein aus Elementen zusammengesetzter Tragrost für Fahrbahnplatten vorgesehen ist, dessen über je zwei oder mehrere Schwimmkörperschlangen reichende Querträger sich mit frei aufliegenden Sattelstücken auf den Schwimmkörpern abstützen, wogegen die Längsträger des Rostes in die Länge eines Schwimmkörpers oder ein ganzzahliges Vielfaches davon betragenden Abständen, insbesondere in der Längsmitte entsprechender Einzelelemente gelenkig unterteilt sind. Die einzelnen Schwimmkörper sollten hier länger sein als jene, die zur Bildung einer Ölsperre Verwendung finden. Für die genannte Spezialaufgabe sind Längen von 15 bis 20 m möglich. Das Spiel der gelenkigen Verbindung kann kleiner sein, weshalb es denkbar ist, Kugelköpfe zu verwenden, deren Höhe beispielsweise nur ein Drittel des Kugeldurchmessers beträgt. Wenn man die Elemente der Fahrbahnkonstruktion jeweils von Längsmitte zu Längsmitte der Schwimmkörper reichen läßt, wird eine ruhige Lage erreicht, da die Schwimmkörper auch bei Seegang die Wellenbewegung aufnehmen, aber kaum auf die Fahrbahn od. dgl. übertragen. Zur Vergrößerung der Stabilität kann man in den äußersten Schwimmkörperschlangen ein besonders starkes Seil anbringen, das an den Schlangenenden quer über dem Verband geführt wird. Da die Querträger nur mit Sattelstücken aufruhen, sind Relativverdrehungen der Schwimmkörper zum Sattelstück und auch Längsneigungen der Schwimmkörper relativ zu den Querträgern möglich. Der Zusammenbau eines entsprechenden Gebildes wird wesentlich vereinfacht, da die Querträger mit den Sattelstücken nur aufgelegt werden müssen.

Bisher wurden Ausführungen beschrieben, bei denen die Schwimmkörper zu Schlangen aneinandergereiht und allenfalls mit Hilfe von Schleppern od. dgl. an den jeweiligen Einsatzort manövriert werden. Bei längeren, aus Schwimmkörpern gebildeten Schlangen und begrenztem Manövrierraum, z. B. in Flüssen, kann es sich als notwendig bzw. vorteilhaft erweisen, an der Schlange selbst Manövrierhilfen vorzusehen. Zu diesem Zweck können im Zuge einer Schlange abstandsweise Schwimmkörper angebracht werden, die Antriebs- oder Lenkeinrichtungen enthalten. Es ist aber auch möglich, eine entsprechende Schlange in sich selbst zu steuern, was man dadurch erreichen kann, daß die Relativlage aneinandergereihter Schwimmkörper über Lenkeinrichtungen einstellbar ist. Solche Lenkeinrichtungen können aus zwei oder mehreren hydraulischen oder pneumatischen Kolbentrieben bestehen, die zusätzlich zu einer bestehenden Seilverbindung vorgesehen werden und einzeln bzw. über Programmsteuerwerke betätigbar sind. Bei Verwendung solcher Steuerungen sieht man meist Stabilisatoren vor, um die Schwimmlage zu stabilisieren, also Verdrehungen des Schwimmkörpers um seine Längsachse zu verhindern bzw. auf ein bestimmtes Maß einzuschränken. Ein aus mehreren, lenkbaren Schwimmkörpern gebildeter Verband kann durch Einstellung der seitlichen Verschwenkung aufeinanderfolgender Schwimmkörper gegeneinander gesteuert werden. Für komplizierte Steueraufgaben kann man die Lenkvorrichtungen mehrerer aneinandergereihter Schwimmkörper mit einer gemeinsamen Steuereinrichtung verbinden. Bei großen Schwimmkörpern wird man hier Fernsteuereinrichtungen vorsehen.

Die notwendigen Energieversorgungsteile für Steuereinrichtungen können in den Schwimmkörpern selbst untergebracht werden. Man kann sogar noch einen Schritt weitergehen und nicht nur die Lenkung, sondern auch den Antrieb oder einen Teil des Antriebs einer aus mehreren Schwimmkörpern gebildeten Schlange in die Schlange selbst verlegen. Zu diesem Zweck kann wenigstens ein Schwimmkörper einer Reihe (Schlange) mit einer eigenen Antriebsvorrichtung, insbesondere in beidseits angebrachten Gondeln untergebrachten Antriebsturbinen, Schrauben od. dgl. versehen sein, deren Antriebsmotoren im Schwimmkörper selbst untergebracht sind. Bei solchen selbst voll manövrierfähigen Gebilden können die nicht mit Antrieben bestückten Schwimmkörper als Container für den Massengut- oder Erdöltransport Verwendung finden. Man wird an den Enden der Schlange zur Verbesserung des Strömungsverhaltens eigens geformte Bug- oder Heckschwimmkörper vorsehen. Aus gleichartigen Schwimmkörpern können verschieden lange Transporteinheiten zusammengesetzt werden. Durch Relativverstellung der einzelnen Schwimmkörper läßt sich bei einer solchen ein Transportschiff ersetzenden Einheit gegenüber einem Schiff eine wesentlich bessere Manövrierfähigkeit erzielen. Einzelne Schwimmkörper der so gebildeten Schlange können mit Mannschaftsräumen usw. ausgestattet werden. Jeder Schwimmkörper trägt sich selbst. Bei einer möglichen Schwenkverstellung der Schwimmkörper in Vertikalrichtung stellt eine aus mehreren Schwimmkörpern gebildete Transporteinheit keine großen Anforderungen an die Festigkeit, wogegen ein entsprechend langes Transportschiff einen Längsträger benötigen würde, der bei der jeweiligen Länge eine ausreichende Biegesteifigkeit ergibt.

In der Zeichnung ist der Erfindungsgegenstand beispielsweise veranschaulicht. Es zeigt

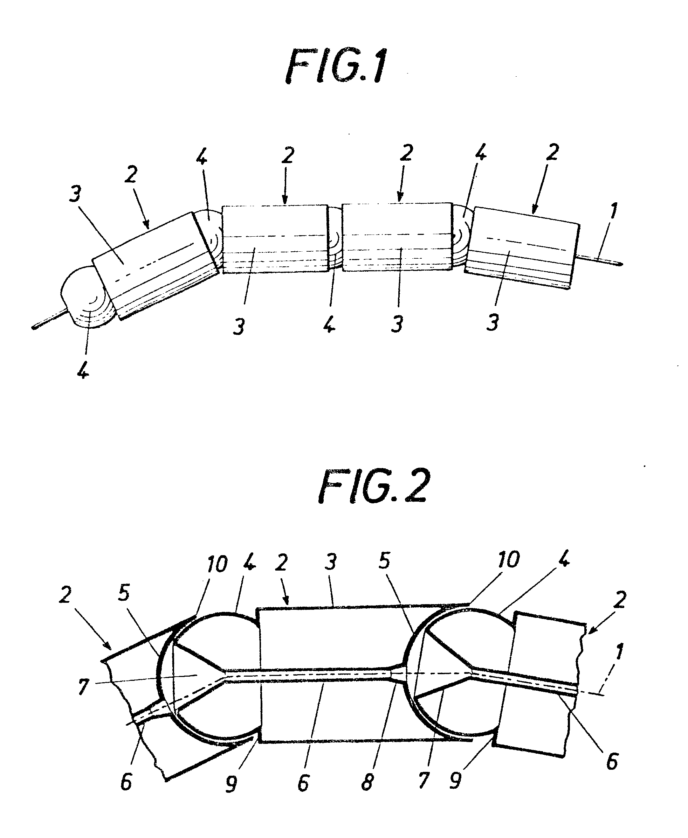

Fig. 1 ein Teilstück eines als Hochseeölsperre verwendbaren Gerätes in Draufsicht,

Fig. 2 schematisiert einen Horizontalschnitt durch drei aufeinanderfolgende Schwimmkörper der Sperre nach Fig. 1 und

Fig. 3 ebenfalls schematisiert ein Teilstück einer schwimmenden Landebahn oder -straße im Querschnitt durch die Schwimmkörper.

Bei dem dargestellten Gerät sind auf ein Stahlseil 1 Schwimmkörper 2, die hier untereinander gleich ausgebildet sind, aufgefädelt. Es könnten auch verschieden lange oder zylindrische und tonnenförmige Schwimmkörper vorgesehen werden. Wesentlich ist dabei, daß an den Enden der Schwimmkörper vorgesehene Verbindungsglieder jeweils zueinander passend ausgeführt sind, um eine Kupplung der Schwimmkörper zu ermöglichen.

Jeder der Schwimmkörper besitzt einen zylindrischen Mantel 3 aus Stahlblech und am einen Ende ein ebenfalls aus Stahlblech hergestelltes Kugelsegment 4 sowie am anderen Ende eine Kugelpfanne 5. Die Schwimmkörper 2 sind Hohlkörper. Für die Durchführung des Seils 1 dient ein Rohr 6, dessen Enden 7, 8 in der Kugel 4 bzw. Pfanne 5 trichterartig erweitert sind, um bei einer Schwenkverstellung aufeinanderfolgender Schwimmkörper 2 Längenänderungen des Seils 6 zu vermeiden. Die Kugelsegmente 4 sind um den erwünschten Schwenkwinkel größer als Halbkugeln. Den Übergang von den abgeschnittenen Enden der Kugeln 4 zum Mantel 3 herstellende Schultern 9 bilden Anschläge für die Ränder 10 der halbkugeligen Pfanne 5.

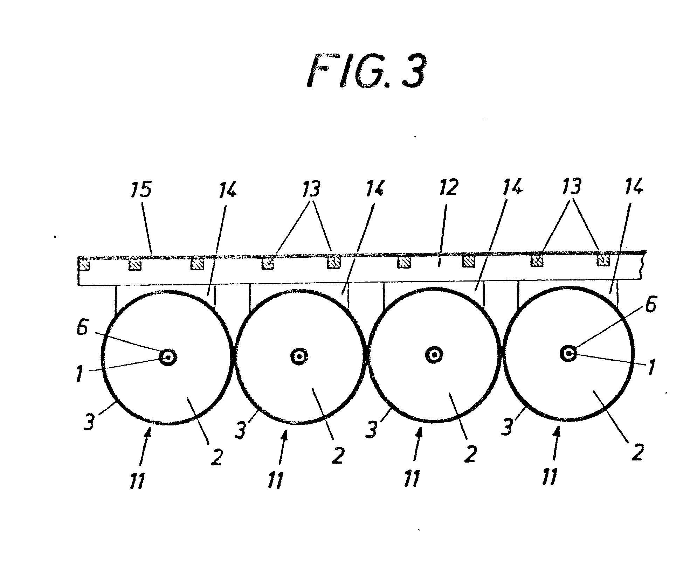

Nach Fig. 3 sind mehrere Stränge 11 aus auf Seilen 1 aufgefädelten Schwimmkörpern 2 nebeneinander angeordnet. Zur Bildung einer schwimmenden Brücke, Landebahn od. dgl. wird ein Tragrost aus Querträgern 12 und in diese versenkten Längsträgern 13 vorgesehen, bei dem die Querträger 12 über je mehrere Schwimmkörper 2 reichen und mit Hilfe von Sattelstücken 14 frei auf den Schwimmkörpern abgestützt sind, wogegen die Längsträger 13 in z. B. einem Abstand von einer Schwimmkörperlänge gelenkig unterteilt sind. Auf den Rost aus den Trägern 12, 13 sind großflächige Fahrbahnplatten 15 aufgelegt.

## Patentansprüche

1. Gerät mit mehreren Schwimmkörpern, die Durchmesser über 1,5 m aufweisen und in ihrer Grundform zylindrisch oder tonnenförmig ausgebildet sind, wobei das eine Ende jedes Schwimmkörpers (2) einen Kugelkopf (4) in Form eines Kugelsegments mit dem Schwimmkörper entsprechendem Durchmesser und das andere Ende eine um den vorgesehenen Schwenkwinkel kleinere Kugelpfanne (5) bildet und die Schwimmkörper (2) mit kugelgelenkartig ineinandergreifenden Enden (4, 5) durch Seile verbindbar sind, die durch axiale Öffnungen (6) der Schwimmkörper (2) geführt sind, dadurch gekennzeichnet, daß bei den zu einzelnen, eine Schlange bildenden Reihen verbindbaren Schwimmkörpern (2) die dem Durchzug des Seils (1) dienenden axialen Öffnungen (6) im Kugelkopf (4) bzw. der Pfanne (5) trichterartige Erweiterungen (7, 8) aufweisen, so daß die Spannlänge des Seils bei jeder Abwinkelung im wesentlichen konstant bleibt, und daß im Übergangsbereich von dem um den Schwenkwinkel größer als eine Halbkugel ausgebildeten Kugelkopf (4) zum übrigen Schwimmkörper eine den Schwenkwinkel begrenzende Anschlagschulter (9) für den Rand (10) der Kugelpfanne (5) ausgebildet ist.

2. Gerät nach Anspruch 1, dadurch gekennzeichnet, daß in wenigstens einem Schwimmkörper einer Reihe (11) eine Seilspannvorrichtung angebracht ist.

3. Gerät nach Anspruch 1 oder 2, dadurch gekennzeichnet, daß zur Bildung einer schwimmenden Brücke, Fahrbahn oder Landepiste mehrere, je aus mehreren auf Seile (1) aufgefädelten Schwimmkörpern (2) bestehende Schwimmkörperschlangen (11) nebeneinander angeordnet sind und ein Tragrost (12, 13) für Fahrbahnplatten (15) vorgesehen ist, dessen über je mehrere Schwimmkörperschlangen (11) reichende Querträger (12) sich mit Sattelstücken (14), die frei aufliegen, auf den Schwimmkörpern (2) abstützen, wogegen die Längsträger (13) in die Länge eines Schwimmkörpers oder ein ganzzahliges Vielfaches davon betragenden Abständen gelenkig unterteilt sind.

4. Gerät nach Anspruch 1, dadurch gekennzeichnet, daß die Relativanlagen aneinandergereihter Schwimmkörper (2) über je zwei Schwimmkörper verbindende Lenkvorrichtung einstellbar sind.

5. Gerät nach Anspruch 4, dadurch gekennzeichnet, daß für die Lenkvorrichtungen mehrerer aneinandergereihter Schwimmkörper eine gemeinsame Steuereinrichtung vorgesehen ist.

6. Gerät nach Anspruch 4 oder 5, dadurch gekennzeichnet, daß wenigstens ein Schwimmkörper einer Reihe (11) mit einer eigenen Antriebsvorrichtung versehen ist, deren Antriebsmotoren im Schwimmkörper selbst untergebracht sind.

7. Gerät nach Anspruch 6, dadurch gekennzeichnet, daß die Antriebsvorrichtung in beidseits am Schwimmkörper angeordneten Gondeln untergebrachte Antriebsturbinen aufweist.

## Claims

1. Apparatus comprising a plurality of floats, which have diameters in excess of 1.5 meters and are cylindrical or barrel-shaped in their basic configuration, wherein one end of each float (2) constitutes a ball head (4) consisting of a segment of a sphere which is equal in diameter to the float, the other end constitutes a ball socket (5), which is smaller by the intended angular movement, and the floats (2) having end portions (4, 5) which interengage lika a ball joint are adapted to be connected by ropes which extend through axial openings (6) of the floats (2), characterized in that the floats (2) are adapted to be connected in individual rows, which constitute a string, the axial openings (6) through which the rope (1) is pulled are formed with funnel-like enlarged portions (7, 8) in the ball head (4) and the socket (5) so that the length of the tensioned rope remains substantially constant in case of any deflection, and a stop shoulder (9) for the rim (10) of the ball socket (5) is provided in the transitional region between the ball head (4), which is larger than a hemisphere by the angular movement, and the remaining float and serves to limit the angular movement.

2. Apparatus according to claim 1, characterized in that a rope-tensioning device is mounted in at least one float of a row (11).

3. Apparatus according to claim 1 or 2, characterized in that a floating bridge, roadway or landing strip is constituted by a plurality of juxtaposed float strips (11), each of which consists of a plurality of floats (2) threaded on ropes (1), and by a carrying grate (12, 13) for road plates (15), which comprises crossbeams (12) which extend each over a plurality of float strings (11) and have saddle pieces (14) which are supported by and rest freely on the floats (2) whereas the longitudinal beams (13) are divided by articulated joints, which are spaced apart by the length of a float or an integral multiple of such length.

4. Apparatus according to claim 1, characterized in that the relative positions of floats (2) which are arranged in a row are adjustable by steering devices which connect adjacent floats.

5. Apparatus according to claim 4, characterized in that a common control device is provided for the steering devices of a plurality of floats which are arranged in a row.

6. Apparatus according to claim 4 or 5, characterized in that at least one float of a row (11) is provided with separate drive means, the drive motors of which are accomodated in the float itself.

7. Apparatus according to claim 6, characterized in that the drive means comprises drive turbines, which are accomodated in gondolas attached to the float on both sides.

## Revendications

1. Dispositif avec plusieurs éléments flottants qui présentent des diamètres supérieurs à 1,5 m et sont réalisés avec une forme fondamentale cylindrique ou du genre barillet, tandis que l'une des deux extrémités de chaque élément flottant (2) forme une tête de rotule (4) sous la forme d'un secteur de rotule ayant un diamètre correspondant à l'élément flottant et que l'autre extrémité forme une cuvette (5) de rotule qui est plus petite à concurrence de l'angle d'orientation prévu, et que les éléments flottants (2) peuvent être assemblés par des câbles par des extrémités (4, 5) venant en prise les unes dans les autres à la manière de joints à rotule par des câbles qui sont passés par des ouvertures (6) axiales dans les éléments flottants (2), caractérisé par le fait que, sur les différents éléments flottants (2) pouvant être assemblés en différentes rangées formant un chapelet, les ouvertures (6) axiales servant au passage du câble (1) dans la tête de rotule (4) ou dans la cuvette (5) présentent des élargissements (7, 8) à la manière d'entonnoirs, si bien que la longueur du câble en tension demeure essentiellement constante pour toute position angulaire entre éléments, et par le fait que dans la zone de transition partant de la tête de rotule (4) qui est réalisée plus grande qu'une hémisphère à concurrence de l'angle d'orientation, jusqu'au restant de l'élément flottant, un épaulement-butée (9) délimitant l'angle d'orientation est façonné pour le bord (10) de la cuvette (5) à rotule.

2. Dispositif suivant la revendication 1, caractérisé par le fait que dans au moins un élément flottant d'une rangée (11) est monté un dispositif tendeur pour le câble.

3. Dispositif suivant la revendication 1 ou 2, caractérisé par le fait que pour former un pont flottant, une chaussée ou une piste d'atterrissage, plusieurs serpentins (11) composés d'éléments flottants (2) enfilés sur des câbles (1) sont disposés côte à côte et qu'une grille porteuse (12, 13) pour des panneaux (15) de chaussée est prévue dont les poutrelles (12) transversales, qui s'étendent chacune sur plusieurs serpentins (11) d'éléments flottants, prennent appui par des embouts en berceau (14) qui reposent librement sur les éléments flottants (2) tandis que par contre les poutrelles (13) longitudinales sont subdivisées de manière articulée à des distances représentant la longueur ou un multiple entier de la longueur d'un élément flottant.

4. Dispositif suivant la revendication 1, caractérisé par le fait que la position réciproque d'éléments flottants (2) rangés l'un à côté de l'autre peut être réglée par l'intermédiaire de dispositifs de gouverne reliant chacun deux éléments flottants.

5. Dispositif suivant la revendication 4, caractérisé par le fait qu'il est prévu pour les dispositifs de gouverne de plusieurs éléments flottants rangés l'un à côté de l'autre un dispositif de pilotage commun.

6. Dispositif suivant la revendication 4 ou 5, caractérisé par le fait qu'au moins un élément flottant d'une rangée (11) est muni d'un dispositif propre d'entraînement dont les moteurs d'entraînement sont abrités dans l'élément flottant proprement dit.

7. Dispositif suivant la revendication 6, caractérisé par le fait que le dispositif d'entraînement présente des turbines de propulsion logées dans des nacelles montées de part et d'autre sur l'élément flottant.

# FIG.1

# FIG.2

# FIG. 3